Europäisches Patentamt

European Patent Office

Office européen des brevets

(19)

(11) Numéro de publication : **0 066 829 B1**

(12) **FASCICULE DE BREVET EUROPÉEN**

(45) Date de publication du fascicule du brevet :
21.11.85

(51) Int. Cl.⁴ : **G 02 B   6/36**

(21) Numéro de dépôt : **82104770.1**

(22) Date de dépôt : **01.06.82**

(54) **Dispositif de jonction des extrémités de deux câbles sous-marins à fibres optiques et procédé de montage d'un tel dispositif.**

(30) Priorité : 05.06.81 FR 8111156

(43) Date de publication de la demande :
15.12.82 Bulletin 82/50

(45) Mention de la délivrance du brevet :
21.11.85 Bulletin 85/47

(84) Etats contractants désignés :
DE FR GB IT

(56) Documents cités :
DE-B- 2 505 027
FR-A- 2 401 434
FR-A- 2 443 074
GB-A- 1 580 061
GB-A- 2 025 650
GB-A- 2 026 200
GB-A- 2 030 723
GB-A- 2 074 753
US-A- 4 171 867
PATENTS ABSTRACTS OF JAPAN, vol.4, no.188, 24 décembre 1980, (P-42) (670)
JOURNAL OF OPTICAL COMMUNICATIONS, vol.1, no.2, novembre 1980, Berlin (DE) H. HORIMA et al.: "Characteristics of jelly-filled optical cables", pages 58-63

(73) Titulaire : **LES CABLES DE LYON Société anonyme dite:**
170 quai de Clichy
F-92111 Clichy Cedex (FR)

(72) Inventeur : **Guazzo, Lucien**
77, rue de la Paix
F-62100 Calais (FR)

(74) Mandataire : **Weinmiller, Jürgen et al**
Zeppelinstrasse 63
D-8000 München 80 (DE)

## Description

La présente invention concerne un dispositif de jonction des extrémités de deux câbles sous-marins à fibres optiques, du type comprenant chacun une âme de logement des fibres optiques, une voûte de fils d'acier enroulés hélicoïdalement autour de cette âme, un tube de cuivre rétreint sur la voûte et une gaine isolante externe, ledit dispositif comprenant :

a) une partie centrale comportant un manchon en métal de résistance mécanique élevée, à paroi cylindrique interne filetée à ses deux extrémités, et

b) de chaque côté de la partie centrale, une partie latérale comportant des moyens permettant d'assurer l'ancrage de l'extrémité de la voûte d'acier de chacun des câbles ainsi que le raccordement de l'ancrage ainsi réalisé audit manchon central, ces moyens se composant respectivement de :

i. une pièce d'ancrage au moins en partie en métal de résistance mécanique élevée, percée du côté tourné vers la partie centrale d'un alésage cylindro-conique pour le passage et le logement des extrémités des fils d'acier formant voûte, et du côté opposé d'un alésage cylindrique de plus grand diamètre pour le logement du tube de cuivre, ladite pièce d'ancrage ayant par ailleurs une paroi cylindrique externe filetée à son extrémité située du côté de la partie centrale, de manière à se fixer dans l'extrémité correspondante filetée du manchon,

ii. une bague conique d'épanouissement et de maintien des fils d'acier formant voûte, disposée dans l'alésage cylindro-conique de ladite pièce d'ancrage de manière à immobiliser lesdits fils d'acier formant voûte entre elle-même et ladite pièce d'ancrage, ladite bague conique étant par ailleurs percée d'un canal axial pour le passage de l'âme de logement des fibres optiques,

iii. un remplissage en résine synthétique durcissable occupant le volume libre entre la surface interne de l'alésage cylindro-conique de la pièce d'ancrage et la surface externe de la bague conique d'épanouissement, autour des extrémités des fils d'acier formant voûte, chacune desdites parties latérales comprenant en outre un capuchon en résine synthétique entourant l'extrémité de la pièce d'ancrage, et se raccordant à la gaine du câble.

La présente invention concerne aussi un procédé de montage d'un tel dispositif.

Cette jonction peut correspondre à la nécessité de réunir deux extrémités de câble au cours de la pose d'une ligne de transmission sous-marine, ou bien à celle d'effectuer une réparation en un point où un câble a été endommagé.

Les câbles sous-marins à fibres optiques comportent généralement une âme recevant les fibres optiques (constituée par un jonc métallique ou en matière plastique muni sur son pourtour de sillons hélicoïdaux), et une voûte formée de fils d'acier enroulés en hélice et recouverte d'un tube de métal conducteur ductile (cuivre ou aluminium) soudé longitudinalement et rétreint sur la voûte de fils d'acier, puis une gaine isolante en matière thermoplastique, telle que le polyéthylène.

Le raccordement de deux extrémités de câbles ainsi constitués est difficile, car il faut à la fois

souder ou coller bout à bout les fibres optiques des deux câbles, en laissant une surlongueur suffisante pour éviter la rupture des fibres sous l'effet d'une traction longitudinale,

assurer la continuité mécanique des voûtes porteuses des deux câbles à travers la jonction, en supportant l'effort de traction subi par le câble lors des manipulations,

assurer l'étanchéité de la jonction à l'eau, même dans le cas des pressions élevées régnant dans les fonds sous-marins.

Il a été proposé dans le document GB-A-2 030 723 un dispositif de jonction des extrémités de deux câbles à fibres optiques du type muni d'une armure tubulaire formée de fils d'acier résistant à la traction, comprenant un manchon métallique comportant à chacune de ses extrémités un filetage externe, deux écrous de compression glissés sur le tube de cuivre à chaque extrémité du câble à raccorder et venant se visser sur le filetage externe du manchon, deux pièces d'ancrage de diamètre interne s'ajustant avec glissement sur l'armure, et d'ouverture interne s'évasant vers le manchon, deux coins coniques munis d'un alésage axial disposés entre l'âme et les fils d'acier de l'armure et des bagues fendues bloquées entre les coins coniques et les bords extrêmes du manchon. Les fibres optiques traversent axialement la cavité interne délimitée par le manchon, et sont raccordées bout à bout à l'intérieur de cette cavité. Le manchon et les écrous de compression sont entourés d'une enveloppe en matière plastique moulée.

Il a d'autre part été proposé dans le document DE-A-2 505 027 de disposer des fibres optiques en surlongueur dans la cavité d'un boîtier de raccordement autour d'un mandrin central.

La présente invention a pour but de remédier aux inconvénients de ces dispositifs, et de procurer un dispositif et un procédé de jonction qui assurent à celle-ci une bonne résistance mécanique et une bonne étanchéité, et qui permettent d'exécuter rapidement le raccordement des extrémités des câbles, en laissant une surlongueur de fibres optiques leur permettant d'absorber des variations importantes de longueur ou de tension, ou une torsion.

Le dispositif selon l'invention est caractérisé en ce que sa partie centrale comprend en outre, à l'intérieur du manchon, un mandrin ou un tube autour duquel sont enroulées les extrémités des fibres optiques, soudées ou raccordées individuellement l'une à l'autre, ledit mandrin étant creusé d'un canal central dans lequel s'engagent les extrémités des âmes de logement des fibres optiques, en ce que le diamètre de la partie filetée de l'une des pièces d'ancrage est inférieur au diamètre de la partie filetée de l'autre pièce d'ancrage, et en ce que le diamètre du filetage du manchon du côté de ladite pièce d'ancrage dont la partie filetée est de diamètre inférieur est de manière correspondante inférieur au diamètre de son filetage du côté de l'autre pièce d'ancrage.

Il répond en outre de préférence à au moins l'une des caractéristiques suivantes :

Il comporte une gaine thermorétractable autour de la jonction entre le manchon de la partie centrale et chacun des capuchons des parties latérales.

Il comporte une gaine thermorétractable autour de la jonction entre le capuchon de chaque partie latérale et la gaine du câble correspondant.

La fraction cylindrique de l'alésage cylindro-conique de la pièce d'ancrage est munie d'un joint y évitant toute pénétration de résine synthétique de remplissage avant son durcissement.

Le procédé de montage d'un dispositif de jonction selon l'invention est caractérisé en ce que :

a) on élimine dans la zone de la jonction sur une longueur notablement supérieure à celle désirée pour ledit dispositif les fils d'acier formant voûte, le tube de cuivre rétreint et la gaine externe des extrémités des câbles, en laissant à nu les fibres optiques,

b) on engage successivement sur les extrémités des âmes à fibres optiques les capuchons en résine synthétique, les pièces d'ancrage et le manchon en métal,

c) on coupe les fils d'acier formant voûte, le tube de cuivre rétreint et la gaine à la longueur nécessaire à celle désirée pour le dispositif,

d) on introduit dans la partie conique de l'alésage cylindro-conique des pièces d'ancrage une certaine quantité de résine synthétique durcissable de remplissage et épanouit les extrémités des fils d'acier formant voûte à l'intérieur de ladite partie conique,

e) on introduit les bagues coniques d'épanouissement des fils d'acier de la voûte à l'intérieur des pièces d'ancrage, on remplit la totalité du volume compris entre les pièces d'ancrage, les extrémités des fils d'acier et les bagues coniques d'épanouissement de la résine synthétique de remplissage, puis on chauffe l'ensemble pour durcir la résine synthétique,

f) on soude les fibres optiques à raccorder et enroule leur surplus de longueur par rapport à la longueur du dispositif autour du mandrin ou du tube,

g) on fait glisser le manchon le long de la partie centrale en faisant passer son filetage de plus grand diamètre au-delà de la pièce d'ancrage de plus faible diamètre, puis le visse sur les deux pièces d'ancrage, et

h) on fait glisser les capuchons en résine synthétique jusqu'au contact du manchon en métal.

De préférence, l'on engage sur les extrémités des âmes à fibres optiques des gaines thermorétractables avant les capuchons en résine synthétique, puis les fait se rétracter par chauffage au-dessus de la surface de contact entre les capuchons et le manchon en métal, après mise en place des capuchons, et/ou l'on engage sur les extrémités des âmes à fibres optiques des gaines thermorétractables avant les capuchons en résine synthétique, puis les fait se rétracter par chauffage au-dessus de la zone de contact entre ces capuchons et les gaines des câbles.

Il est décrit ci-après, à titre d'exemple et en référence aux figures du dessin annexé, un dispositif de jonction selon l'invention et son procédé de montage.

la figure 1 représente l'ensemble du dispositif en élévation.

la figure 1A représente en coupe axiale la partie du dispositif à la gauche de l'axe XX de la figure 1.

la figure 1B représente en coupe axiale la partie du dispositif à la droite de l'axe XX de la figure 1.

La figure 2 représente une variante selon la même coupe que la figure 1B.

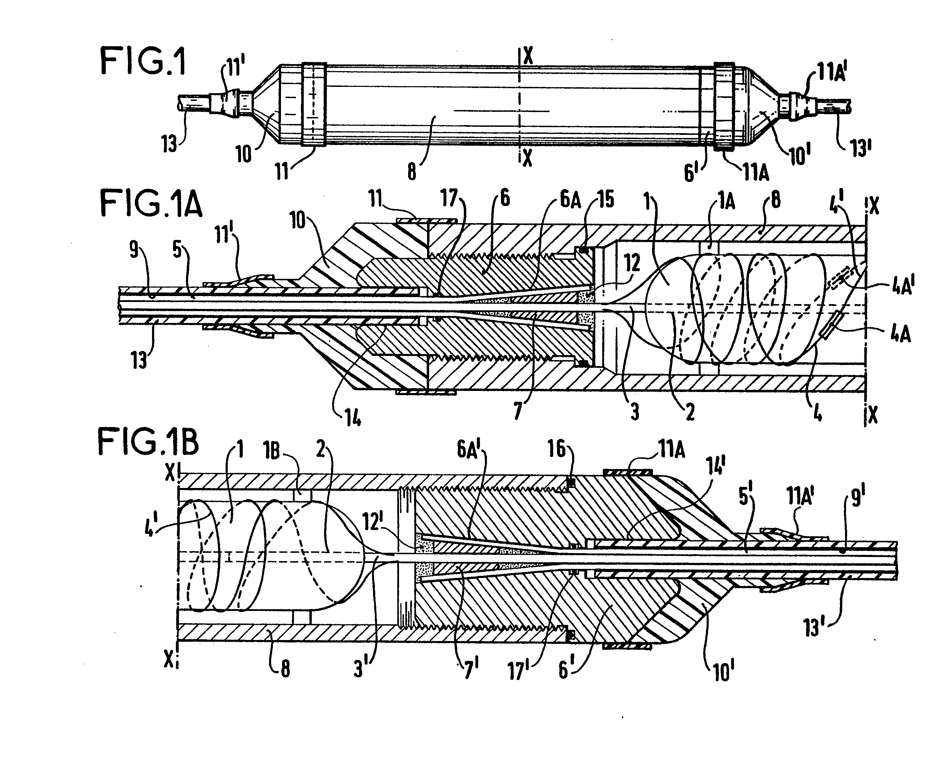

Dans la figure 1, on voit un manchon métallique externe 8 du dispositif de jonction, deux capuchons d'extrémité 10, 10' en polyéthylène, et des gaines thermorétractables 11, 11' à l'extrémité gauche et 11A, 11A' à l'extrémité droite, destinées à assurer l'étanchéité, d'une part à la surface de contact entre le manchon métallique et les capuchons d'extrémité, d'autre part au raccordement du capuchon sur la gaine externe des câbles.

Comme représenté dans les figures 1A et 1B, le dispositif de jonction comporte un mandrin axial 1, percé d'un canal central 2 pour le logement des extrémités des âmes 3, 3', contenant des fibres optiques (telles que des joncs métalliques ou plastiques creusés de rainures hélicoïdales de réception des fibres optiques). Ce mandrin est maintenu en place à l'intérieur du manchon par des plots 1A, 1B, laissant subsister un certain jeu. Les fibres optiques telles que 4, 4' sont enroulées autour du mandrin 1 et soudées en bout les unes aux autres, les soudures étant protégées par de petits manchons métalliques ou en matière plastique 4A, 4A'.

De ce fait, en cas de tension ou de torsion sur le dispositif de jonction, les fibres optiques peuvent absorber les efforts, en glissant autour du mandrin.

Les fils d'acier des voûtes 5, 5' de protection mécanique des câbles sont immobilisés par épanouissement entre des alésages internes cylindro-coniques 6A, 6A' de deux pièces d'ancrage 6, 6' en acier, et la paroi externe conique de deux bagues coniques de maintien 7, 7', elles-mêmes percées d'un canal axial pour le passage des âmes 3, 3' des câbles.

On notera que les pièces d'ancrage 6, 6' ne sont pas symétriques, pour des questions de facilité de montage du dispositif, qui apparaîtront plus loin.

L'espace resté entre les pièces d'ancrage, les bagues de maintien et les fils d'acier est rempli d'une résine époxyde durcie à chaud 12, 12', qui évite tout glissement de ces derniers après leur mise en place. Les pièces d'ancrage 6, 6' sont filetées sur la majeure partie de leur surface externe, vers le milieu du dispositif, et vissées sur des taraudages internes des extrémités du manchon en acier 8. Celui-ci n'est pas symétrique, pour des raisons de facilité de montage, comme déjà signalé à propos des pièces d'ancrage.

Des tubes de cuivre 9, 9' rétreints sur les fils d'acier formant voûte des câbles, et les gaines externes de polyéthylène 13, 13' qui recouvrent ces tubes, sont engagés dans des logements cylindriques 14, 14' des extrémités des pièces d'ancrage du côté des câbles. La continuité de l'étanchéité entre les gaines externes des câbles et les pièces d'ancrage est assurée par les capuchons 10, 10' en polyéthylène. Les jonctions entre le manchon 8 et ces capuchons sont protégées des fuites résiduelles éventuelles par les gaines thermorétractables 11, 11A. Celles entre les capuchons et les gaines externes des câbles sont protégées par les gaines thermorétractables 11', 11A'. Des joints toriques 15, 16 assurent l'étanchéité entre le manchon et les pièces d'ancrage, soit en aval du filetage (15) pour la pièce d'ancrage de gauche, qui n'est pas au contact de l'eau ambiante, soit en amont de celui-ci (16) pour la pièce d'ancrage de droite, qui vient au contact de celle-ci.

Il est disposé enfin des joints toriques 17, 17' dans les canaux axiaux des pièces d'ancrage 6, 6', entre leurs alésages coniques et les logements 14, 14' des tubes de cuivre et des gaines des câbles. Ces joints ont pour fonction d'empêcher la sortie de la résine époxyde des alésages coniques lors du remplissage par celle-ci de l'intervalle entre ces pièces d'ancrage, les fils d'acier et les bagues de maintien 7, 7'.

Les pièces d'ancrage 6, 6' peuvent être formées partiellement d'un matériau céramique isolant, notamment si l'on veut isoler électriquement l'âme optique et les fils d'acier par rapport au manchon externe, en vue de faciliter la transmission des courants de téléalimentation des répéteurs et séparer leur potentiel de celui de l'eau environnante.

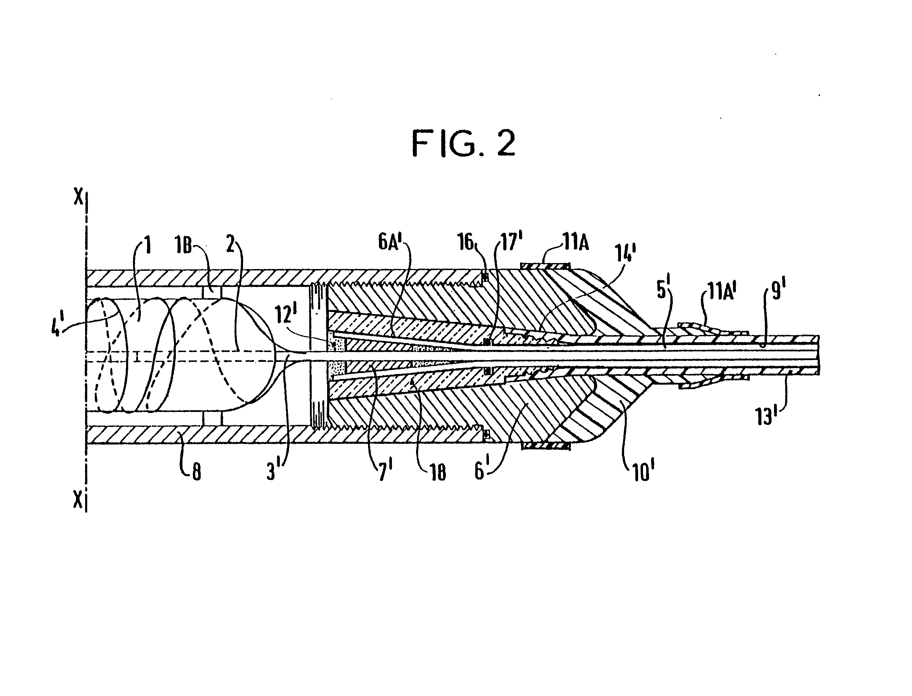

La figure 2 représente ainsi la même partie du dispositif à la droite de l'axe X-X de la figure 1, mais dans laquelle la zone interne 18 de la pièce d'ancrage 6 est en matière céramique électriquement isolante, de façon à isoler l'âme à fibres optiques et la voûte de fils d'acier par rapport au manchon externe 8 ce qui facilite la transmission des courants de téléalimentation des répéteurs et les écarte du potentiel de la mer.

Le montage du dispositif qui vient d'être décrit s'effectue comme suit.

On coupe les fils d'acier formant voûte 5 des extrémités des câbles sur une longueur suffisante, correspondant à la longueur désirée pour la cavité interne au manchon métallique.

On coupe également les tubes de cuivre rétreints sur les fils d'acier 9 et les gaines externes 13 des câbles sur une longueur un peu supérieure, en fonction de la longueur des pièces d'ancrage.

On engage de part et d'autre successivement sur les âmes à fibres optiques les manchons thermorétractables 11, 11', 11A, 11A', les capuchons de polyéthylène 10, 10', les pièces d'ancrage en acier 6, 6' munies de leurs joints et le manchon externe en acier 8, en les faisant glisser le plus loin possible sur les âmes.

On dénude alors les fibres optiques 4, 4' sur une longueur correspondant à l'excès nécessaire pour le raccordement.

On épanouit alors les fils d'acier à l'intérieur des alésages coniques des pièces d'ancrage, après avoir rempli ces derniers d'un peu de résine époxyde chaude ; on introduit les bagues coniques 7, 7' d'épanouissement des fils d'acier entre les fils d'acier, les âmes 3, 3' à fibres optiques passant à travers les canaux centraux des deux bagues. On finit de remplir de résine époxyde l'espace compris entre les pièces d'ancrage, les fils et les bagues de maintien, puis on chauffe l'ensemble par l'extérieur pour polymériser et durcir la résine et bloquer les fils d'acier à l'intérieur des pièces d'ancrage.

On soude alors deux à deux les fibres optiques à raccorder et enroule en hélice le surplus de longueur de celles-ci autour du mandrin 1, celui-ci étant centré sur les deux extrémités des âmes à fibres optiques qui sont engagées dans son canal axial. On entoure les soudures des manchons de protection 4A, 4A'.

On visse le manchon externe en acier 8 sur la pièce d'ancrage de gauche 6 munie d'un joint torique 15, puis on le ramène sur la jonction après avoir mis en place les plots de calage 1A, 1B, et on le visse sur la pièce d'ancrage de droite 6', munie du joint torique 16.

On fait alors glisser les capuchons en polyéthylène jusqu'au contact du manchon en acier, puis met en place les manchons thermorétractables et les chauffe, de manière à assurer l'étanchéité des surfaces de raccordement. La jonction est terminée.

Bien que le dispositif de jonction et son procédé de montage qui viennent d'être décrits en référence aux figures du dessin paraissent la forme de réalisation préférable de l'invention, on comprendra que certaines modifications peuvent leur être apportées sans sortir du cadre de l'invention, certains des organes du dispositif ou certaines opérations du procédé pouvant être remplacés par d'autres qui procureraient un résultat technique analogue. En particulier, on peut remplacer la fixation du manchon externe sur les pièces d'ancrage à l'aide de filetages par une fixation par des vis ou des tenons enfoncés ou vissés dans les corps des pièces d'ancrage. Les bagues de maintien des fils d'acier peuvent être biconiques, et non plus coniques.

Il est également possible de remplacer le mandrin destiné à recevoir l'extrémité raccordée des fibres par un tube qui prend appui sur des épaulements pratiqués sur les faces internes des deux pièces d'ancrage.

D'autre part, dans le cas où ces pièces d'ancrage sont entièrement métalliques, il serait nécessaire pour permettre la téléalimentation de répéteurs d'isoler par l'extérieur les pièces d'ancrage et le manchon externe métallique au moyen d'une gaine isolante en matière synthétique électriquement isolante, telle que le polyéthylène.

On peut améliorer encore la protection contre les rentrées d'eau en remplissant d'un liquide hydrophobe (comme le polyisobutylène) l'espace intérieur dans lequel sont raccordées les fibres optiques.

Enfin, l'étanchéité peut encore être améliorée en plaçant des joints encore plus efficaces entre le câble et l'entrée du boîtier de raccordement.

**Revendications**

1. Dispositif de jonction des extrémités de deux câbles sous-marins à fibres optiques, du type comprenant chacun une âme (3, 3') de logement des fibres optiques (4, 4'), une voûte de fils d'acier (5, 5') enroulés hélicoïdalement autour de cette âme, un tube de cuivre (9, 9') rétreint sur la voûte et une gaine isolante externe (13, 13'), ledit dispositif comprenant :

a) une partie centrale comportant un manchon (8) en métal de résistance mécanique élevée, à paroi cylindrique interne filetée à ses deux extrémités, et

b) de chaque côté de la partie centrale, une partie latérale comportant des moyens permettant d'assurer l'ancrage de l'extrémité de la voûte d'acier de chacun des câbles, ainsi que le raccordement de l'ancrage ainsi réalisé audit manchon central, ces moyens se composant respectivement de :

i. une pièce d'ancrage (6, 6') au moins en partie en métal de résistance mécanique élevée, percée du côté tourné vers la partie centrale d'un alésage cylindro-conique (6A, 6A') pour le passage et le logement des extrémités des fils d'acier formant voûte, et du côté opposé d'un alésage cylindrique de plus grand diamètre (14, 14') pour le logement du tube de cuivre, ladite pièce d'ancrage ayant par ailleurs une paroi cylindrique externe filetée à son extrémité située du côté de la partie centrale, de manière à se fixer dans l'extrémité correspondante filetée du manchon,

ii. une bague conique (7, 7') d'épanouissement et de maintien des fils d'acier formant voûte, disposée dans l'alésage cylindro-conique de ladite pièce d'ancrage de manière à immobiliser lesdits fils d'acier formant voûte entre elle-même et ladite pièce d'ancrage, ladite bague conique étant par ailleurs percée d'un canal axial pour le passage de l'âme de logement des fibres optiques,

iii. un remplissage en résine synthétique durcissable occupant le volume libre entre la surface interne de l'alésage cylindro-conique de la pièce d'ancrage et la surface externe de la bague conique d'épanouissement, autour des extrémités des fils d'acier formant voûte, chacune desdites parties latérales comprenant en outre un capuchon en résine synthétique (10, 10') entourant l'extrémité de la pièce d'ancrage, et se raccordant à la gaine du câble, caractérisé en ce que la partie centrale comprend en outre, à l'intérieur du manchon, un mandrin (1) ou un tube autour duquel sont enroulées les extrémités des fibres optiques, soudées ou raccordées individuellement l'une à l'autre, ledit mandrin étant creusé d'un canal central (2) dans lequel s'engagent les extrémités des âmes (3, 3') de logement des fibres optiques, en ce que le diamètre de la partie filetée de l'une des pièces d'ancrage (6) est inférieur au diamètre de la partie filetée de l'autre pièce d'ancrage (6'), et en ce que le diamètre du filetage du manchon du côté de ladite pièce d'ancrage dont la partie filetée est de diamètre inférieur est de manière correspondante inférieur au diamètre de son filetage du côté de l'autre pièce d'ancrage.

2. Dispositif selon la revendication 1, caractérisé en ce qu'il comporte en outre une gaine thermorétractable (11, 11A) autour de la jonction entre le manchon de la partie centrale et chacun des capuchons des parties latérales.

3. Dispositif selon les revendications 1 ou 2, caractérisé en ce qu'il comporte en outre une gaine thermorétractable (11', 11A') autour de la jonction entre le capuchon de chaque partie latérale et la gaine du câble correspondant.

4. Dispositif selon l'une des revendications 1 à 3, caractérisé en ce que la fraction cylindrique de l'alésage cylindro-conique de la pièce d'ancrage est munie d'un joint (17, 17') y évitant toute pénétration de résine synthétique de remplissage avant son durcissement.

5. Dispositif selon l'une des revendications 1 à 4, caractérisé en ce qu'au moins la zone interne (18, figure 2) des pièces d'ancrage venant au contact du manchon est en matière céramique électriquement isolante.

6. Procédé de montage d'un dispositif de jonction selon la revendication 1, caractérisé en ce que :

a) on élimine dans la zone de la jonction sur une longueur notablement supérieure à celle désirée pour ledit dispositif les fils d'acier formant voûte (5, 5'), le tube de cuivre rétreint (9, 9') et la gaine externe (13, 13') des extrémités des câbles, en laissant à nu les fibres optiques (4, 4'),

b) on engage successivement sur les extrémités des âmes à fibres optiques les capuchons (10, 10') en résine synthétique, les pièces d'ancrage et le manchon en métal,

c) on coupe les fils d'acier formant voûte, le tube de cuivre rétreint et la gaine à la longueur nécessaire à celle désirée pour le dispositif,

d) on introduit dans la partie conique de l'alésage cylindro-conique des pièces d'ancrage (6, 6') une certaine quantité de résine synthétique durcissable de remplissage et épanouit les extrémités des fils d'acier formant voûte à l'intérieur de ladite partie conique,

e) on introduit les bagues coniques d'épanouissement des fils d'acier de la voûte à l'intérieur des pièces d'ancrage, on remplit la totalité du volume compris entre les pièces d'ancrage, les extrémités des fils d'acier et les bagues coniques d'épanouissement de la résine synthétique de remplissage (12, 12'), puis on chauffe l'ensemble pour durcir la résine synthétique,

f) on soude les fibres optiques à raccorder et enroule leur surplus de longueur par rapport à la longueur du dispositif autour du mandrin (1) ou du tube,

g) on fait glisser le manchon le long de la partie centrale en faisant passer son filetage de plus grand diamètre au-delà de la pièce d'ancrage de plus faible diamètre, puis le visse sur les deux pièces d'ancrage, et

h) on fait glisser les capuchons en résine synthétique (10, 10') jusqu'au contact du manchon en métal.

7) Procédé selon la revendication 6, caractérisé en ce que l'on engage sur les extrémités des âmes à fibres optiques des gaines thermorétractables (11, 11A) avant les capuchons en résine synthétique (10, 10') puis les fait se rétracter par chauffage au-dessus de la surface de contact entre les capuchons et le manchon en métal, après mise en place des capuchons.

8) Procédé selon les revendications 6 ou 7, caractérisé en ce que l'on engage sur les extrémités des âmes à fibres optiques des gaines thermorétractables (11', 11A') avant les capuchons en résine synthétique, puis les fait se rétracter par chauffage au-dessus de la zone de contact entre ces capuchons et les gaines des câbles.

**Claims**

1. A device for joining the ends of two submarin cables with optical fibres, of the type comprising each a core (3, 3') for housing the optical fibres (4, 4'), an armouring of steel wires (5, 5') helically wound around this core, a copper tube (9, 9') retracted on the armouring, and an outer insulating sheath (13, 13'), said device comprising :

a) a central part comprising s sleeve (8) of a metal with high mechanical resistance, with a cylindrical inner wall and threads at both ends, and

b) on each side of the central part, a lateral part comprising means permitting to ensure the anchoring of the end of the steel armouring of both cables, as well as the connection of the thus realized anchoring to said central sleeve, these means being respectively composed of :

i. an anchoring piece (6, 6') at least partly of a metal with high mechanical resistance, having a cylindro-conical bore on the side turned towards the central part (6A, 6A') for the passage and housing of the steel wires forming the armouring, and on the opposed side a cylindrical bore of larger diameter (14, 14') for housing the copper tube, said anchoring piece further having a cylindrical outer wall threaded at its end situated on the side of the central part, so as to attach itself to the corresponding threaded end of the sleeve,

ii. a conical ring (7, 7') for flaring and securing the steel wires forming the armouring, disposed in the cylindro-conical bore of said anchoring piece so as to immobilize said steel wires forming the armouring between itself and said anchoring piece, said conical ring further presenting an axial channel for the passage of the core which houses the optical fibers,

iii. a filling of thermosetting synthetic resin occupying the free space between the inner surface of the cylindro-conical bore of the anchoring piece and the outer surface of the flaring conical ring, around the ends of the steel wires forming the armouring,

each one of said lateral parts further comprising a cap of synthetic resin (10, 10') surrounding the end of the anchoring piece, and being connected to the sheath of the cable, characterized in that the central part further comprises inside the sleeve a mandrel (1) or tube around which the ends of optical fibers are wound, welded or connected individually to one another, said mandrel being provided with a central channel (2) in which are inserted the cores (3, 3') for housing the optical fibers, in that the diameter of the threaded part or one of the anchoring pieces (6) is smaller than the diameter of the threaded part of the other anchoring piece (6'), and in that the diameter of the threading of the sleeve on the side of said anchoring piece, the threaded part of which has a smaller diameter, is correspondingly smaller than the diameter of its threading on the side of the other anchoring piece.

2. A device as claimed in claim 1, characterized in that it further comprises a heat-shrinkable sheath (11, 11A) around the junction between the sleeve of the central part and each of the caps on the side parts.

3. A device as claimed in claims 1 or 2, characterized in that it further comprises a heat-shrinkable sheath (11', 11A') around the junction between the cap on each side part and the corresponding cable sheath.

4. A device as claimed in one of claims 1 to 3, characterized in that the cylindrical part of the cylindro-conical bore of the anchoring part is fitted with a seal (17, 17') preventing the penetration of synthetic resin filler prior to its hardening.

5. A device as claimed in one of claims 1 to 4, characterized in that at least the inner area (18, fig. 2) of the anchoring parts coming in contact with the sleeve is made of an electrically insulating ceramic material.

6. A method for assembling a junction device according to claim 1, characterized in that

a) the steel wires of the armouring (5, 5'), the retracted copper tube (9, 9') and the outside sheath (13, 13') of the cable ends are eliminated from the junction area over a length which is notably greater than that required for said device, thus baring the optical fibers (4, 4'),

b) the caps (10, 10') of synthetic resin, the anchoring parts and the metal sleeve are engaged one after the other on the ends of the cores housing the optical fibers,

c) the steel armouring wires, the retracted copper tube and the sheath are all cut to the length required for the device,

d) a certain amount of hard-setting synthetic resin filler is introduced into the conical part of the cylindro-conical bore of the anchoring parts (6, 6'), and the ends of the steel armouring wires are flared out inside said conical part,

e) the conical rings used to flare the steel armouring wires are inserted into the anchoring parts ; the entire space included between the anchoring parts, the ends of the steel armouring wires and the conical flaring rings is filled with synthetic resin filler (12, 12') and then the whole assembly is heated to harden the synthetic resin,

f) the optical fibers to be connected are welded and their slack in relation to the length of the device is wound around the mandrel (1) or tube,

g) the sleeve is pulled back over the central part by passing its threading of larger diameter beyond the anchoring piece of smaller diameter ; then the sleeve is screwed onto the two anchoring parts, and

h) the caps of synthetic resin (10, 10') are made to slide until they come into contact with the metal sleeve.

7. A method as claimed in claim 6, characterized in that heat-shrinkable sheaths (11, 11A) are pulled over the ends of the cores housing the optical fibers prior to the synthetic resin caps (10, 10'), whereupon they are shrunk by heating above the area of contact between the caps and the metal sleeve, following installation of the caps.

8. A method as claimed in claim 6 or 7, characterized in that heat-shrinkable sheaths (11', 11A') are pulled over the ends of the cores housing the optical fibers before the synthetic resin caps, whereupon they are shrunk by heating above the area of contact between the caps and the cable sheaths.

**Patentansprüche**

1. Vorrichtung zur Verbindung der Enden zweier Lichtleitfaserseekabel, von der Art, die je eine Seele (3, 3') zur Unterbringung der Lichtleitfasern (4, 4'), eine Bewehrung aus Stahldrähten (5, 5'), die spiralförmig um diese Seele gewickelt sind, ein Kupferrohr (9, 9'), das auf die Bewehrung aufgeschrumpft ist, und eine äußere Isolierhülle (13, 13') aufweist, wobei die Vorrichtung enthält :

a) einen zentralen Bereich mit einer Muffe (8) aus einem Metall mit hohem mechanischem Widerstand, mit einer zylindrischen Innenwand und mit einem Gewinde an jedem ihrer beiden Enden, und

b) auf jeder Seite des zentralen Bereichs einen seitlichen Bereich, der Mittel aufweist, die die Verankerung des Endes der Stahlbewehrung jedes der Kabel und den Anschluß der so hergestellten Verankerung an die zentrale Muffe ermöglichen, wobei diese Mittel je bestehen aus :

i. einem Verankerungsstück (6, 6'), das zumindest zum Teil aus einem Metall mit hohem mechanischem Widerstand besteht und das auf der dem zentralen Bereich zugewandten Seite eine zylindrischkonische Bohrung (6A, 6A') für den Durchgang und die Aufnahme der die Bewehrung bildenden Stahldrähte, während es auf der entgegengesetzten Seite eine zylindrische Bohrung größeren Durchmessers (14, 14') für die Aufnahme des Kupferrohrs aufweist, wobei dieses Verankerungsstück außerdem eine zylindrische Außenwand besitzt, die an dem den zentralen Bereich zugewandten Ende ein Gewinde aufweist, um sich an dem entsprechenden mit Gewinde versehenen Ende der Muffe zu befestigen,

ii. einem konusförmigen Ring (7, 7') zum Auseinanderspreizen und Festhalten der die Bewehrung bildenden Stahldrähte, der in der zylindrisch-konischen Bohrung des Verankerungsstücks so angeordnet ist, daß die die Bewehrung bildenden Stahldrähte zwischen ihm und dem Verankerungsstück immobilisiert werden, wobei dieser konusförmige Ring außerdem einen axialen Kanal für die Durchführung der Seele zur Unterbringung der Lichtleitfasern aufweist,

iii. einer Füllung aus härtbarem Kunststoffharz, das den freien Raum zwischen der inneren Oberfläche der zylindrisch-konischen Bohrung des Verankerungsstücks und der äußeren Oberfläche des konusförmigen Spreizrings rund um die Enden der die Bewehrung bildenden Stahldrähte einnimmt,

wobei jeder der Seitenbereiche außerdem eine Kappe (10, 10') aus Kunstharz aufweist, die das Ende des Verankerungsstücks umgibt und sich an die Hülle des Kabels anschließt, dadurch gekennzeichnet, daß der zentrale Bereich außerdem im Inneren der Muffe einen Dorn (1) oder ein Rohr aufweist, um den herum die Enden der Lichtleitfasern gerollt und verschweißt oder individuell miteinander verbunden sind, wobei der Dorn einen zentralen Kanal (2) aufweist, in den die Enden der Seelen (3, 3') für die Unterbringung der Lichtleitfasern eingeführt sind, daß der Durchmesser des Gewindebereichs eines der Verankerungsstücke (6) geringer ist als der Durchmesser des Gewindebereichs des anderen Verankerungsstücks (6'), und daß der Durchmesser des Muffengewindes auf der Seite des Verankerungsstücks, dessen Gewindebereich den geringeren Durchmesser aufweist, in gleicher Weise geringer ist als der Durchmesser seines Gewindes auf der Seite des anderen Verankerungsstücks.

2. Vorrichtung nach Anspruch 1, dadurch gekennzeichnet, daß sie außerdem eine wärmeschrumpfbare Hülle (11, 11A) um die Verbindungsstelle zwischen der Muffe des zentralen Bereichs und jeder der Kappen der Seitenbereiche aufweist.

3. Vorrichtung nach Anspruch 1 oder 2, dadurch gekennzeichnet, daß sie außerdem eine wärmeschrumpfbare Hülle (11', 11A') um die Verbindungsstelle zwischen der Kappe jedes Seitenbereichs und der Hülle des entsprechenden Kabels aufweist.

4. Vorrichtung nach einem der Ansprüche 1 bis 3, dadurch gekennzeichnet, daß der zylindrische Abschnitt der zylindrischkonischen Bohrung des Verankerungsstücks mit einer Dichtung (17, 17') versehen ist, die hier jedes Eindringen von Kunstharz vor seiner Erhärtung vermeidet.

5. Vorrichtung nach einem der Ansprüche 1 bis 4, dadurch gekennzeichnet, daß zumindest die innere Zone (18, Fig. 2) der Verankerungsstücke, die mit der Muffe in Berührung kommt, aus einem elektrisch isolieren den Keramikmaterial ist.

6. Verfahren zum Zusammenbau einer Verbindungsvorrichtung nach Anspruch 1, dadurch gekennzeichnet, daß

a) man in dem Verbindungsbereich auf eine Länge, die wesentlich größer ist als die für die Vorrichtung erwünschte Länge, die die Bewehrung bildenden Stahldrähte (5, 5'), das aufgeschrumpfte Kupferrohr (9, 9') und die äußere Hülle (13, 13') der Kabelenden entfernt, indem man die Lichtleitfasern (4, 4') blank läßt,

b) man hintereinander auf die Enden der Seelen aus Lichtleitfasern die Kappen (10, 10') aus Kunstharz, die Verankerungstücke und die Metallmuffe aufzieht,

c) man die die Bewehrung bildenden Stahldrähte, das aufgeschrumpfte Kupferrohr und die Hülle auf die Länge schneidet, die notwendig ist für die gewünschte Länge der Vorrichtung,

d) man in den konischen Teil der zylindrischkonischen Bohrung der Verankerungsstücke (6, 6') eine gewisse Menge von härtbarem Kunstharz als Füllung einführt und die Enden der die Bewehrung bildenden Stahldrähte im Inneren dieses konischen Teils spreizt,

e) man die konischen Spreizringe für die Stahldrähte der Bewehrung in das Innere der Verankerungsstücke einführt, man den ganzen Raum zwischen den Verankerungsstücken, den Enden der Stahldrähte und den konischen Spreizringen mit dem Kunstharz (12, 12') füllt und dann das Ganze erwärmt, um das Kunstharz zu härten,

f) man die zu verbindenden Lichtleitfasern schweißt und ihren Längenüberschuß in bezug auf die Länge der Vorrichtung um den Dorn (1) oder das Rohr aufrollt,

g) man die Muffe entlang des zentralen Bereichs gleiten läßt, indem man ihr Gewinde mit dem größeren Durchmesser hinter das Verankerungsstück mit dem kleineren Durchmesser bringt, worauf man sie auf die beiden Verankerungsstücke aufschraubt, und

h) man die Kappen aus Kunstharz (10, 10') bis in Kontakt mit der Metallmuffe schiebt.

7. Verfahren nach Anspruch 6, dadurch gekennzeichnet, daß man auf die Enden der Seelen zur Unterbringung der Lichtleitfasern wärmeschrumpfbare Hüllen (11, 11A) vor die Kappen aus Kunstharz (10, 10') schiebt und sie dann oberhalb der Kontaktoberfläche zwischen den Kappen und der Metallmuffe nach Anbringen der Kappen durch Erhitzen zum Schrumpfen bringt.

8. Verfahren nach den Ansprüchen 6 oder 7, dadurch gekennzeichnet, daß man auf die Enden der Seelen zur Unterbringung der Lichtleitfasern wärmeschrumpfbare Hüllen (11', 11A') vor die Kappen aus Kunstharz schiebt und sie dann oberhalb der Kontaktzone zwischen den Kappen und den Hüllen der Kabel durch Erhitzen zum Schrumpfen bringt.

FIG.1

FIG.1A

FIG.1B

1

# FIG. 2